# EUROPEAN PATENT SPECIFICATION

(11) **EP 0 768 023 B1**
(45) Date of publication and mention of the grant of the patent: **27.06.2001**
(21) Application number: 96202751.2
(22) Date of filing: 02.10.1996
(51) Int. Cl.: A01B 29/06, A01B 49/02

(54) **A soil cultivating machine**
Bodenbearbeitungsmaschine
Machine pour le travail du sol

(30) Priority: 10.10.1995 NL 1001384
(43) Date of publication of application: 16.04.1997
(73) Proprietor: MAASLAND N.V., 3155 PD Maasland (NL)
(72) Inventor: Bom, Cornelis Johannes Gerardus, 3181 VC Rozenburg (NL)
(74) Representative: Corten, Maurice Jean F.M.

(56) References cited:
- GB-A- 2 192 773
- NL-A- 9 001 873

## Description

The invention relates to a soil cultivating machine comprising a frame, soil cultivating members and a roller, which roller is mounted to arms that are disposed movably in height to the remaining part of the soil cultivating machine, said roller having a frame, to which the arms are detachably couplable in a plurality of fixed positions wherein the roller is coupled at different distances to the remaining part of the machine.

From the Dutch publication 9200959 a soil cultivating machine is known, whereby the roller can be simply clamped to the roller arms by means of a plurality of bolts. Removal of the bolts leads to immediate disconnection between the arms and the roller frame.

The invention aims at obtaining a coupling between the roller and the machine, whereby on the one hand the distance between the roller and the machine is adjusted in a simple manner and whereby on the other hand the roller can be simply replaced by an other type of roller.

According to the invention such is achieved in that the arms and/or the roller frame comprise coupling means including a plurality of projections and/or recesses for mutual engagement and at least one securing means for securing the engagement of said machine parts. In principle only one clamping member is needed in such a construction.

The invention further relates to a method of connecting a roller to a soil cultivating machine respectively disconnecting same therefrom, which soil cultivating machine includes arms capable of being coupled with the roller, whereby the roller and the remaining part of the soil cultivating machine can be interconnected by raising the arms of the machine, then putting same on the frame of the machine, in such a way that there is achieved a connection between the projections and recesses of the roller and the arms, and finally clamping the arms to the frame of the roller.

It is noticed that in the Dutch publication 9001873 there is described a soil cultivating machine whose roller is fastened to the arms of the machine by means of a number of nuts. In the arms of the roller there is provided a number of apertures for these nuts in such a way that the roller can be arranged at different distances from the soil cultivating members. The machine is additionally provided with a sowing machine coupled to the machine. However, this sowing machine does not bear on the roller of the machine.

By means of the construction according to the invention there is obtained a more universally employable machine.

For a number of soil cultivating operations it is desirable to increase the distance between the roller and the soil cultivating members. The reason may be that between the roller and the soil cultivating members there has to be disposed a crumbling and levelling plate. For other circumstances it may be desirable either to mount a bigger roller or an other type of roller. Moreover, it may be advantageous to mount the roller, during operation, as close as possible to the soil cultivating members when the machine is combined with a sowing machine. In this way it will be achieved that the centre of gravity of the machine is located closer to the tractor. In the construction according to the invention, the bearing of the sowing machine on the roller, as frequently occurs, remains possible.

For a better understanding of the present invention and to show how the same may be carried into effect, reference will now be made, by way of example, to two embodiments.
Figure 1 shows, in side view, a soil cultivating machine provided with a roller capable of being disconnected;
Figure 2 is an enlarged view of the roller, shown together with part of the coupling arms;
Figure 3 is a rear view of the roller in the direction of the arrow III in Figure 2;
Figure 4 is a perspective view of the rear side of the roller;
Figure 5 is an enlarged view taken on the line V - V in Figure 3;
Figure 6 is en enlarged view taken on the line VI - VI in Figure 3;
Figure 7 is a side view of a second embodiment of the invention, showing exclusively the roller and part of the coupling arms;
Figure 8 is an enlarged rear view of part of the coupling device shown in Figure 7, and
Figure 9 is en enlarged cross-sectional view according to the line IX - IX in Figure 7.

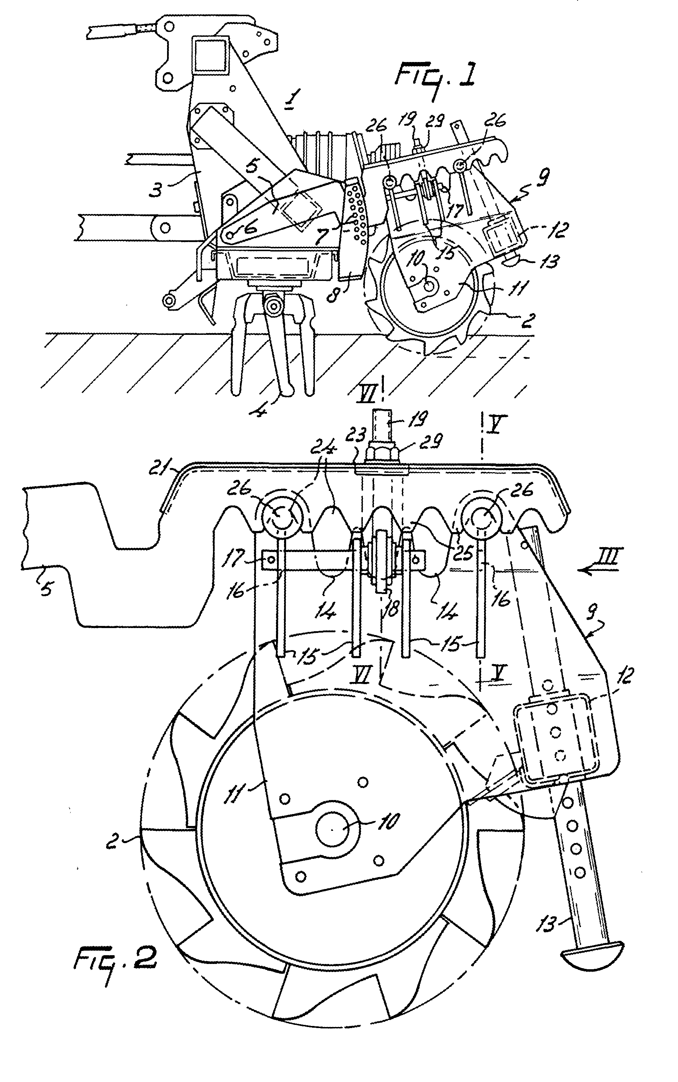

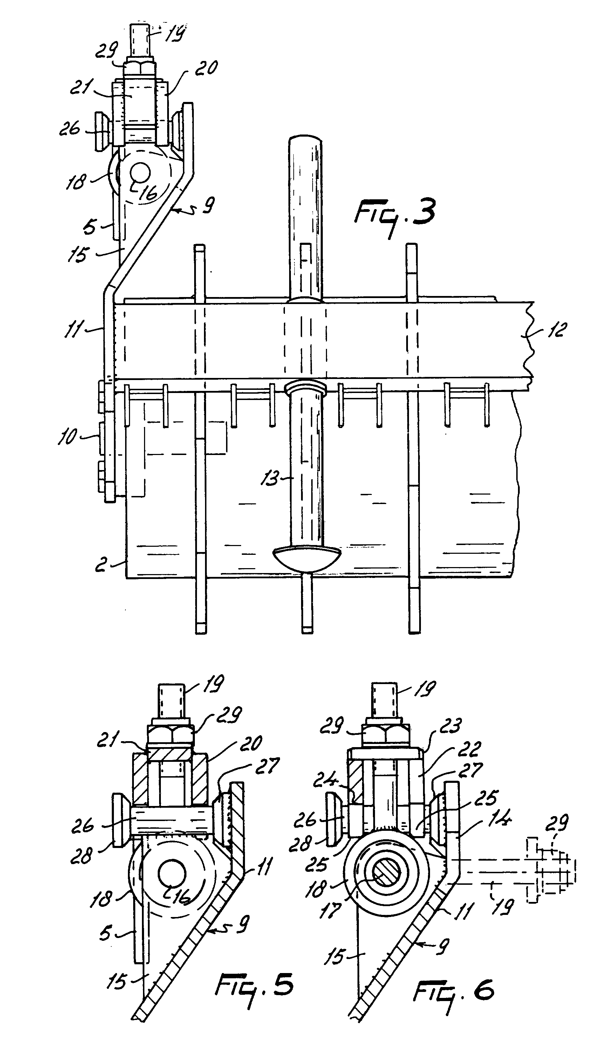

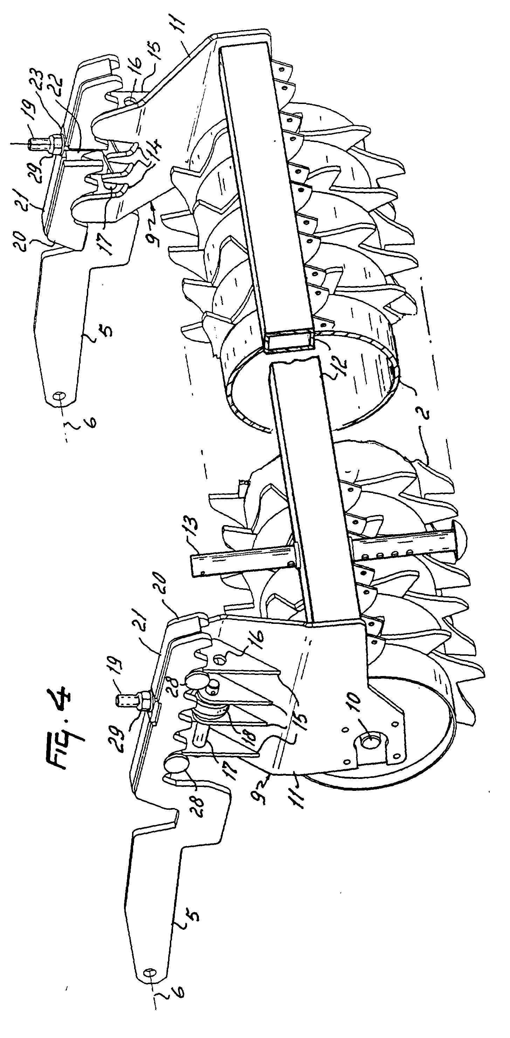

The Figures 1 to 6 show a soil cultivating machine in accordance with the invention. In this embodiment, said machine is designed as a rotary harrow 1, provided with a roller 2.

The soil cultivating machine has a frame 3 including a trestle, by means of which the machine can be coupled to a non-shown tractor. Moreover the machine includes a row of soil cultivating members 4 provided with tines, which are capable of being driven, during operation, by means of a non-shown driving about at least substantially vertical shafts.

Near its side the machine is provided with two rearwardly extending arms 5 which, pivotably in pivot points 6 about shafts extending transversely to the direction of travel A, are coupled with the frame 3 of the machine.

In this embodiment, the arms 5 can be fixed by means of apertures 7 in supporting plates 8 of the frame 3 and an aperture in the arms and a supporting pin, so as to be immovable in upward and downward direction.

However, in this embodiment, the arms 5 bear on a non-shown pin in the apertures 7, so that they can freely move upwards, but are limited in their downward movement.

To the arms 5 the roller 2 can be mounted in such a way that the distance from the roller to the soil cultivating members 4 of the machine can be adjusted. The roller is provided with a frame 9, in which the roller is disposed so as to be freely rotatable about a shaft 10. For that purpose, said frame 9 includes supporting plates 11 for the support of the shaft 10; the frame 9 further includes a beam 12 located, seen in the direction of travel A, at the rear side of the roller and extending transversely to the direction of travel A. To the beam 12 there is mounted a support 13 provided with a foot, which support is passed through an aperture in the beam 12 and can be fixed in different positions relative to the beam by means of a non-shown pin. The position of the beam 12 and the support 13 is shown more in detail in the perspective view of Figure 4 and in the rear view of Figure 3. In this embodiment, the roller is designed as a packer roller known per se. The upper sides of the supporting plates 11 are provided with three V-shaped upwardly opened recesses 14. At the outside the supporting plates are provided with four reinforcement ribs 15, located next to the recesses 14. In these ribs 15 there are provided apertures 16, so that a rod 17 can be passed therethrough. The rod 17 is further passed through a universal ball joint 18 to which a screw rod 19 is fastened. The arms 5 are broadened at their ends because of the fact that side plates 20 are attached to the inner sides of the arms by means of connecting elements 21. The side plates 20 are divided into two portions by means of a slot 22. Said connecting element 21 has an aperture 23 corresponding to the inwardly opening slot 22. At the lower sides of the ends of the arms there are located coupling means constituted by recesses 24, between which there are provided projections 25. The number of recesses 24 in this embodiment amounts to seven. Seen in rear view, the supporting plates 11 are bent inwardly (see Figure 3). To the upper part of the supporting plates, there are disposed, besides the three recesses 14, horizontal, outwardly projecting further coupling means constituted by rods 26, which, at their ends with which they are fastened to the side plate, include a conically bevelled ring 27, while at their free ends there is also provided a suchlike ring 28. The rods 26 are supported by one of the ribs 15, which is desirable because the arms 5, and thus the soil cultivating machine and possibly the sowing machine, will bear on the rods 26 by means of the recesses 24.

The couplings function as follows. In the operative position shown in Figures 1 to 6, the arms 5 are pivoted downwards about the pivot points 6, in such a way that two recesses 24 fit about the rods 26. The screw rod 19 is pivoted upwards about the rod 17, in such a way that the rod 19 is located in the aperture 23 and the rod 17 points upwards. On the screw rod 19 there is disposed a nut 29 and in this manner the arms 5 are fixed to the roller. If it would be desired to move the roller relative to the rest of the-machine or to replace the roller by an other type of roller, this can be achieved in a very simple manner. First, the support 13 of the roller can be shifted downwards by loosening the fastening to the beam 12, so that the foot of the support comes in contact with the ground, and then the support can be refixed. Hereafter the nut 29 can be loosened by means of a key to such an extent that the screw rod 19 can rotate about the rod 17, comes out of the slot 23 and rests against the wall of the pertaining supporting plate 11. When the nuts of the two arms 5 have been loosened and the screw rods have pivoted away, the arms 5 can pivot upwards about the pivot points 6 and come free from the rods 26. Now the roller is free from the rest of the machine. By bearing on its contact with the ground and on the support 13, the roller maintains at least substantially its initial position whereby the supporting plates 11 are positioned such that their upper sides extend substantially horizontally. Now the arms 5 of the machine can bear in the supporting pins of the supporting plates 8, and the tractor can pull the soil cultivating machine from the roller. When it is desired to recouple the same roller to the machine, at a larger distance than before, the rod 17 can be loosened and be shifted via the apertures 16 in the reinforcement ribs 15. Due to this the coupling 18 comes free from the rod 17. Then the coupling 18 can be disposed again on the rod 17, e.g. between the two reinforcement ribs to the left of the initial position. Thereupon the arms 5 can be recoupled with the roller. Because of the searching shape of the recesses 24 and the rings 27 and 28, the arms 5 can be put on the supporting plates 11. The screw rods 19 can be pivoted upwards about the rods 17 and, due to the fact that the coupling 18 is a universal joint, the screw rods, when pivoting upwards, can easily be put in the apertures 23, because there is sufficient freedom of movement. By tightening the nuts 29, the arms 5 can be clamped into the right position on the supporting plates 11. After the fastening of the support 13 to the beam 12 has been loosened, said support can be shifted upwards and be refixed free from the ground. Then the machine is again ready for use. It will be obvious that the roller can also be moved in the other direction.

The roller shown in the drawings is a so-called packer roller. However, it may also be desired to replace the packer roller by an other roller, such as a cage roller. In this case the other roller has to include a frame corresponding to that of the packer roller and also a support, so that the other roller can be placed in a position in which the arms can also be coupled with the new roller. When it would only be desired to use the coupling device for the purpose of changing rollers and not also for adapting the distance from the roller to the soil cultivating members, a smaller number of recesses 24 on the arms 5 would suffice.

A great advantage of the construction in accordance with the invention is that the connection of the roller to the remaining part of the machine respectively the disconnection of same therefrom can be carried out by one person.

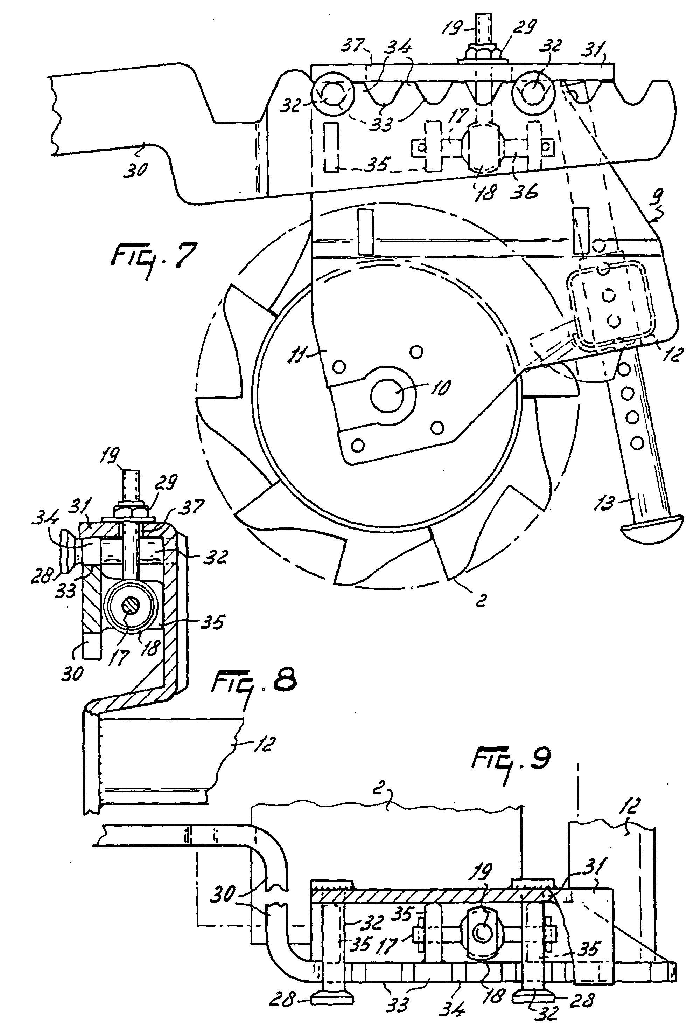

In an other embodiment according to Figures 7 to 9, parts corresponding to those of Figures 1 to 6 are indicated by the same reference numerals. These drawings do not show the soil cultivating machine, but exclusively part of arms 30, by means of which a roller 2 can be coupled to the soil cultivating machine. Also these arms are capable of pivoting in height relative to the machine about horizontal pivot points. In contrast with the previous embodiment, the arms 30, for the purpose of disconnecting the roller, have to be pivoted downwards. Like in the previous embodiment, the roller 2 includes supporting plates 11 constituting part of the frame 9 and a crossbeam 12 connecting these supporting plates. If desired, by means of this connecting beam, in a manner known per se, scrapers can be connected for the purpose of scraping the earth caking on from the roller. Furthermore there is provided a support 13 capable of being adjusted in height relative to the frame and by means of which the roller can bear on the ground. Each of the supporting plates 11 includes at the upper side a connecting element 31 projecting outside the supporting plate, which connecting element 31 corresponds to the connecting elements 21 of the previous embodiment. The supporting plates 11 bear protruding rods 32, corresponding to the rods 26 of the previous embodiment. These rods 32 include a ring 28. At their upper sides, the arms 30 have six upwardly directed recesses 33, widening upwardly, between which there are created upwardly rounded projections 34. The rods 32 fit with some play in the recesses 33.

In this embodiment, between said recesses 33, in which the rods 32 are located, there are disposed three further corresponding recesses. The arms 30 have at their inside three ribs 35 which, like the ribs 15, are provided with apertures, through which a rod 36 can be passed. At its ends, the rod is blocked against shifting out of the apertures by means of non-shown pins.

Like in the other embodiment, a screw rod 19 is coupled with the rod 36 by means of a universal joint 18, so that the rod can also pivot transversely to the longitudinal direction. At its upper side the screw rod includes a nut 29. Each connecting element 31 is provided with a slot 37, through which, in the mounted situation as shown in Figure 7, the screw rod can be inserted. When the nut 29 is tightened, the arms 30 are fixed to the supporting plates 11 at the lower side of the connecting element 31. When the roller has to be disconnected, the nut 29 is loosened. Now the arms 30 can pivot downwards, so that the recesses 33 come free from the rods 32. Then the screw rod 19 can pivot downwards about the rod 36 and hang against the arm.

Like in the previous embodiment, the arms 30 can bear in the supporting plates 8 of the machine. Also in this case, the construction can be utilized either to adjust the distance of the roller relative to the soil cultivating members, or to mount an other roller to the machine. The construction is simple and strong and can be employed by the user without much force being required. The coupling construction according to this figure is particularly relevant when the roller is somewhat wider than the rest of the machine. This may be of importance for the purpose of removing small ridges of earth, created during operation. Then, somewhat behind the supporting plates 8 of the machine, the arms 30 can be bent outside a little, so that they are adapted to the somewhat wider roller (Figure 9).

In the first embodiment described above, the soil cultivating machine is represented as a rotary harrow; this is a machine provided with a row of juxtaposed soil cultivating members, rotating about substantially vertical shafts. However, it is possible to apply the method in accordance with the invention and the constructions according to the invention with other soil cultivating machines, such as rotary cultivators, whereby the soil cultivating members rotate about a horizontal shaft. It is noticed that the soil cultivating machines are often combined with sowing machines. Then, the horizontal connecting elements 21 of the side plates 20 can also be utilized, if desired, for supporting the sowing machine on the roller via the arms 5. In the construction according to Figures 7 to 9, the sowing machine is capable of bearing directly, via connecting elements 31, on the supporting plates of the roller.

It is noticed that in both embodiments the support 13 is disposed at the rear side of the roller. This place is favourable because the user of the soil cultivating machine, standing behind the machine, is able to move the support in a simple manner, in such a way that, after being disconnected, the roller bears on its contact surface and on this additional support. However, it is of importance that the centre of gravity of the disconnected unit is located between the two support surfaces. In a slightly different construction of the roller, the support 13 might be located at the other side of the support surface of the roller, e.g. near the side. The support 13 is located at the front side of the roller, e.g. at lateral side and connected against an arm for the roller, or connected against or with a front and transverse beam. It is further noticed that it may occur that the roller has to be disconnected when the machine including its soil cultivating members rests on a flat bottom, as well as when it is in its operative position, whereby the soil cultivating members are dug in. This means that the shape of the recesses 14, 33 on the one hand and the location of the rods 25, 32 on the other hand have to be adapted to each other so as to fit in each other, also when the positions differ a little. The same applies for the screw rod 19, which, in case of a somewhat different position of the elements to be coupled, can still be inserted into the pertaining opening 24 or into the slot 37, because of the presence of the universal joint 18.

It is known that under different conditions, such as the type of soil and the humidity, the use of rollers adapted to these conditions is of importance. By means of the construction in accordance with the invention, different rollers can optionally be coupled in a simple and user-friendly manner and therefore the invention relates to the combination of a soil cultivating machine with a number of interchangeable rollers.

The machine according to the invention may further be characterized in that:
- a sowing machine to be connected with the soil cultivating machine can bear on the supporting plates of the frame of the roller,
- the sowing machine can rest on the arms and, via said arms, bears on the roller,
- the arms each include a side plate, which side plates are interconnected by means of a substantially horizontal connecting element, on which a fastening nut can bear and which connecting element may also serve as a support of the sowing machine,
- the rollers can be coupled to the soil cultivating machine by means of the coupling devices described in the preceding claims.

The invention is not restricted to the embodiments shown in the drawings.

## Claims

1. A soil cultivating machine (1) comprising a frame, soil cultivating members (4) and a roller (2), which roller (2) is mounted to arms (5) that are disposed movably in height to the remaining part of the soil cultivating machine, said roller (2) having a frame (11, 12), to which the arms (5) are detachably couplable in a plurality of fixed positions wherein the roller (2) is coupled at different distances to the remaining part of the machine (1), characterized in that the arms (5) and/or the roller frame (11, 12) comprise coupling means (24, 26) including a plurality of projections and/or recesses for mutual engagement, and at least one securing means (19) for securing the engagement of said machine parts (5, 11, 12).

2. A soil cultivating machine as claimed in claim 1, characterized in that the means (24, 26) are provided such that engagement and disengagement is be achieved by moving the arms (5) in predominantly vertical direction towards or away from said frame (11, 12).

3. A soil cultivating machine as claimed in claim 1 or 2, characterized in that also the means (24, 26) include a number of coupling points arranged, seen in the direction of travel, one behind the other.

4. A soil cultivating machine as claimed in claim 1, 2 or 3, characterized in that the coupling points are disposed at the upper side of the roller.

5. A soil cultivating machine comprising a frame, soil cultivating members and a roller, which roller is mounted to arms that are disposed movably in height to the remaining part of the soil cultivating machine, said roller having a frame, to which the arms are detachably coupled, characterized in that the arms, seen in the direction of travel of the machine, include a number of coupling points arranged one behind the other, by means of which they can be coupled to the roller, whereby the connection and the disconnection can be achieved by pivoting the arms upwardly, whereby the coupling points are disposed at the upper side of the roller.

6. A soil cultivating machine as claimed in any one of the preceding claims, characterized in that the frame of the roller (2) includes supporting means (12, 13), capable of being moved and secured in height relative to the roller (2), and serving to support the roller (2) when same is disconnected from the arms, which supporting means ensure that the position of the roller (2) when the latter is disconnected from the arms (5), equals at least substantially the position in which same is connected thereto.

7. A soil cultivating machine as claimed in any one of the preceding claims, characterized in that the supporting means (12, 13), seen in the direction of travel, are disposed at the rear side of the roller (2).

8. A soil cultivating machine as claimed in any one of the preceding claims, characterized in that the arms (5) and the roller (2) include coupling points designed as corresponding projections and recesses.

9. A soil cultivating machine as claimed in claim 8, characterized in that the recesses have an at least partially V-shape, widening towards the opening.

10. A soil cultivating machine as claimed in any one of the preceding claims, characterized in that the arms (5) are connected to the rest of the machine about substantially horizontal shafts.

11. A soil cultivating machine as claimed in any one of the preceding claims, characterized in that the roller (2) includes a frame (11, 12), provided with supporting plates (11), and that the coupling means for connecting the arms (5) of the machines are mounted to said supporting plates (11).

12. A soil cultivating machine as claimed in claim 11, characterized in that the arms of the soil cultivating machine can be connected from above to the supporting plates of the roller.

13. A soil cultivating machine as claimed in any one of the preceding claims, characterized in that the coupling means comprise at least a screw rod (19), mounted either to the arms (5) or to the frame of the roller (11, 12), by means of which the arms (5) and the frame (11, 12) are clamped on each other.

14. A soil cultivating machine as claimed in claim 13, characterized in that the screw rod (19) is disposed about a substantially horizontal pivot shaft (17) extending in the direction of travel.

15. A soil cultivating machine as claimed in claim 14, characterized in that the pivot shaft (17) is constituted by a rod, while the screw rod (19) is coupled with the rod (17) by means of a universal ball joint (18).

16. A soil cultivating machine as claimed in any one of the preceding claims, characterized in that the screw rod (19) is movable in the direction of travel of the machine, in such a way that upon connecting the roller (2) the distance from the roller (2) to the remaining part of the machine can be adjusted.

17. A method of connecting a roller to a soil cultivating machine respectively disconnecting same therefrom, which soil cultivating machine includes arms capable of being connected to the roller, characterized in that the roller and the remaining part of the soil cultivating machine can be interconnected by pivoting the arms of the machine, then bringing same into contact with the upper side of the frame of the roller, in such a way that there is achieved a coupling between projections and recesses of the roller and the arms, and finally clamping the arms to the frame of the roller.

## Patentansprüche

1. Bodenbearbeitungsmaschine (1) mit einem Rahmen, Bodenbearbeitungsgliedern (4) und einer Walze (2), wobei die Walze (2) an Armen (5) angebracht ist, die mit dem übrigen Teil der Bodenbearbeitungsmaschine höhenbeweglich verbunden sind, wobei die Walze (2) einen Rahmen (11, 12) aufweist, an dem die Arme (5) in einer Vielzahl von festen Positionen lösbar anbringbar sind, in denen die Walze (2) in unterschiedlichen Abständen zum übrigen Teil der Maschine (1) angeordnet ist,
dadurch gekennzeichnet, daß die Arme (5) und/oder der Walzenrahmen (11, 12) Anschlußvorrichtungen (24, 26) mit mehreren Vorsprüngen und/oder Ausnehmungen zum gegenseitigen Eingreifen und mindestens eine Festlegungsvorrichtung (19) zum Festlegen der Eingriffsverbindung der Maschinenteile (5, 11, 12) umfassen.

2. Bodenbearbeitungsmaschine nach Anspruch 1,
dadurch gekennzeichnet, daß die Vorrichtungen (24, 26) derart ausgebildet sind, daß das Eingreifen und Lösen dadurch erzielt wird, daß die Arme (5) in überwiegend vertikaler Richtung auf den Rahmen (11, 12) zu- oder von ihm wegbewegt werden.

3. Bodenbearbeitungsmaschine nach Anspruch 1 oder 2,
dadurch gekennzeichnet, daß auch die Vorrichtungen (24, 26) mehrere Anschlüsse aufweisen, die in Arbeitsrichtung gesehen hintereinander angeordnet sind.

4. Bodenbearbeitungsmaschine nach Anspruch 1, 2 oder 3,
dadurch gekennzeichnet, daß die Anschlüsse an der Oberseite der Walze angeordnet sind.

5. Bodenbearbeitungsmaschine mit einem Rahmen, Bodenbearbeitungsgliedern und einer Walze, wobei die Walze an Armen angebracht ist, die mit dem übrigen Teil der Bodenbearbeitungsmaschine höhenbeweglich verbunden sind, wobei die Walze einen Rahmen aufweist, an dem die Arme lösbar angebracht sind,
dadurch gekennzeichnet, daß die Arme in Arbeitsrichtung der Maschine gesehen eine Anzahl von hintereinander angeordneten Anschlüssen aufweist, mittels derer sie an die Walze anschließbar sind, wobei das Anschließen und Lösen durch Hochschwenken der Arme zu erzielen ist, und wobei die Anschlüsse an der Oberseite der Walze angeordnet sind.

6. Bodenbearbeitungsmaschine nach einem der vorhergehenden Ansprüche,
dadurch gekennzeichnet, daß der Rahmen der Walze (2) eine Stützvorrichtung (12, 13) enthält, die relativ zu der Walze (2) in Höhenrichtung bewegbar und festlegbar ist und zur Abstützung der Walze (2) dient, wenn diese von den Armen gelöst ist, wobei die Stützvorrichtung sicherstellt, daß die Position der Walze (2) in deren von den Armen (5) gelöstem Zustand zumindest im wesentlichen der Position entspricht, in der sie mit den Armen verbunden ist.

7. Bodenbearbeitungsmaschine nach einem der vorhergehenden Ansprüche,
dadurch gekennzeichnet, daß die Stützvorrichtung (12, 13) in Arbeitsrichtung gesehen auf der Rückseite der Walze (2) angeordnet ist.

8. Bodenbearbeitungsmaschine nach einem der vorhergehenden Ansprüche,
dadurch gekennzeichnet, daß die Arme (5) und die Walze (2) Anschlüsse enthalten, die als einander entsprechende Vorsprünge und Ausnehmungen ausgeführt sind.

9. Bodenbearbeitungsmaschine nach Anspruch 8,
dadurch gekennzeichnet, daß die Ausnehmungen zumindest teilweise eine V-Form aufweisen, die zur Öffnung hin breiter wird.

10. Bodenbearbeitungsmaschine nach einem der vorhergehenden Ansprüche,
dadurch gekennzeichnet, daß die Arme (5) mit dem Rest der Maschine durch im wesentlichen horizontale Achsen verbunden sind.

11. Bodenbearbeitungsmaschine nach einem der vorhergehenden Ansprüche,
dadurch gekennzeichnet, daß die Walze (2) einen mit Stützplatten (11) versehenen Rahmen (11, 12) aufweist, und daß die Anschlußvorrichtungen zum Anschließen der Arme (5) der Maschinen an den Stützplatten (11) angebracht sind.

12. Bodenbearbeitungsmaschine nach Anspruch 11,
dadurch gekennzeichnet, daß die Arme der Bodenbearbeitungsmaschine von oben an die Stützplatten der Walze anschließbar sind.

13. Bodenbearbeitungsmaschine nach einem der vorhergehenden Ansprüche,
dadurch gekennzeichnet, daß die Anschlußvorrichtungen mindestens eine Gewindespindel (19) umfassen, die entweder an den Armen (5) oder am Rahmen (11, 12) der Walze angebracht ist, und mittels der die Arme (5) und der Rahmen (11, 12) miteinander verspannt sind.

14. Bodenbearbeitungsmaschine nach Anspruch 13,
dadurch gekennzeichnet, daß die Gewindespindel (19) an einer im wesentlichen horizontalen Schwenkachse (17) angeordnet ist, die sich in Arbeitsrichtung erstreckt.

15. Bodenbearbeitungsmaschine nach Anspruch 14,
dadurch gekennzeichnet, daß die Schwenkachse (17) durch eine Stange gebildet ist, wobei die Gewindespindel (19) mit der Stange (17) durch ein Universalkugelgelenk (18) verbunden ist.

16. Bodenbearbeitungsmaschine nach einem der vorhergehenden Ansprüche,
dadurch gekennzeichnet, daß die Gewindespindel (19) in Arbeitsrichtung der Maschine derart bewegbar ist, daß bei Anschluß der Walze (2) der Abstand zwischen der Walze (2) und dem übrigen Teil der Maschine einstellbar ist.

17. Verfahren zum Anschließen einer Walze an eine Bodenbearbeitungsmaschine bzw. Abkoppeln von dieser, wobei die Bodenbearbeitungsmaschine Arme aufweist, die an die Walze anschließbar sind,
dadurch gekennzeichnet, daß die Walze und der übrige Teil der Bodenbearbeitungsmaschine dadurch miteinander verbindbar sind, daß die Arme der Maschine verschwenkt werden, daß diese dann mit der Oberseite des Rahmens der Walze derart in Kontakt gebracht werden, daß eine Eingriffsverbindung zwischen Vorsprüngen und Ausnehmungen der Walze und der Arme erzielt wird, und daß die Arme schließlich am Rahmen der Walze verspannt werden.

## Revendications

1. Machine à travailler le sol (1) comportant un châssis, des organes de travail du sol (4) et un rouleau (2), rouleau (2) qui est monté sur des bras (5) qui sont disposés de manière mobile en hauteur sur la partie restante de la machine à travailler le sol, ledit rouleau (2) ayant un châssis (11, 12) auquel les bras (5) peuvent être accouplés de manière amovible dans une pluralité de positions fixées où le rouleau (2) est accouplé à différentes distances par rapport à la partie restante de la machine (1), caractérisée en ce que les bras (5) et/ou le châssis de rouleau (11, 12) comportent des moyens d'accouplement (24, 26) incluant une pluralité de saillies et/ou d'évidements destinés à une coopération mutuelle, et au moins des premiers moyens de fixation (19) destinés à fixer la coopération desdites parties de machine (5, 11, 12).

2. Machine à travailler le sol selon la revendication 1, caractérisée en ce que les moyens (24, 26) sont agencés de telle sorte que la prise et la libération peuvent être obtenues en déplaçant les bras (5) dans une direction principalement verticale vers ledit châssis (11, 12), ou loin de celui-ci.

3. Machine à travailler le sol selon la revendication 1 ou 2, caractérisée en ce que les moyens (24, 26) comportent également de nombreux points d'accouplement agencés, vus dans la direction de déplacement, l'un derrière l'autre.

4. Machine à travailler le sol selon la revendication 1, 2 ou 3, caractérisée en ce que les points d'accouplement sont disposés au niveau du côté supérieur du rouleau.

5. Machine à travailler le sol comportant un châssis, des organes de travail du sol et un rouleau, rouleau qui est monté sur des bras qui sont disposés de manière mobile en hauteur sur la partie restante de la machine à travailler le sol, ledit rouleau ayant un châssis, auquel les bras sont accouplés de manière amovible, caractérisée en ce que les bras, vus dans la direction de déplacement de la machine, comportent de nombreux points d'accouplement agencés l'un derrière l'autre, par l'intermédiaire desquels ils peuvent être accouplés au rouleau, de sorte que la connexion et la déconnexion peuvent être réalisées en pivotant les bras vers le haut, de sorte que les points d'accouplement sont disposés au niveau du côté supérieur du rouleau.

6. Machine à travailler le sol selon l'une quelconque des revendications précédentes, caractérisée en ce que le châssis du rouleau (2) comporte des moyens de support (12, 13) pouvant être déplacés et fixés en hauteur par rapport au rouleau (2), et servant à supporter le rouleau (2) lorsque celui-ci est déconnecté des bras, moyens de support qui garantissent que la position du rouleau (2) lorsque ce dernier est déconnecté des bras (5) est égale au moins sensiblement à la position dans laquelle celui-ci est connecté à ceux-ci.

7. Machine à travailler le sol selon l'une quelconque des revendications précédentes, caractérisée en ce que les moyens de support (12, 13), vus dans la direction de déplacement, sont disposés au niveau du côté arrière du rouleau (2).

8. Machine à travailler le sol selon l'une quelconque des revendications précédentes, caractérisée en ce que les bras (5) et le rouleau (2) comportent des points d'accouplement conçus sous la forme de saillies et d'évidements correspondants.

9. Machine à travailler le sol selon la revendication 8, caractérisée en ce que les évidements ont au moins partiellement une forme de V, s'élargissant vers l'ouverture.

10. Machine à travailler le sol selon l'une quelconque des revendications précédentes, caractérisée en ce que les bras (5) sont connectés au reste de la machine autour d'arbres pratiquement horizontaux.

11. Machine à travailler le sol selon l'une quelconque des revendications précédentes, caractérisée en ce que le rouleau (2) comporte un châssis (11, 12), muni de plaques de support (11), et en ce que les moyens d'accouplement destinés à connecter les bras (5) des machines sont montés sur lesdites plaques de support (11).

12. Machine à travailler le sol selon la revendication 11, caractérisée en ce que les bras de la machine de culture de sol peuvent être connectés à partir du dessus aux plaques de support du rouleau.

13. Machine à travailler le sol selon l'une quelconque des revendications précédentes, caractérisée en ce que les moyens d'accouplement comportent au moins une tige filetée (19), montée sur les bras (5) ou sur le châssis du rouleau (11, 12), par l'intermédiaire de laquelle les bras (5) et le châssis (11, 12) sont serrés l'un sur l'autre.

14. Machine à travailler le sol selon la revendication 13, caractérisée en ce que la tige filetée (19) est disposée autour d'un arbre de pivotement pratiquement horizontal (17) s'étendant dans la direction de déplacement.

15. Machine à travailler le sol selon la revendication 14, caractérisée en ce que l'arbre de pivotement (17) est constitué d'une tige, tandis que la tige filetée (19) est accouplée à la tige (17) par l'intermédiaire d'un joint à rotule universel (18).

16. Machine à travailler le sol selon l'une quelconque des revendications précédentes, caractérisée en ce que la tige filetée (19) est mobile dans la direction de déplacement de la machine, d'une manière telle que lors de la connexion du rouleau (2), la distance à partir du rouleau (2) jusqu'à la partie restante de la machine peut être ajustée.

17. Procédé destiné à connecter un rouleau à une machine à travailler le sol, et respectivement à le déconnecter de celle-ci, machine à travailler le sol qui comporte des bras pouvant être connectés au rouleau, caractérisé en ce que le rouleau et la partie restante de la machine à travailler le sol peuvent être connectés mutuellement en pivotant les bras de la machine, ensuite en amenant ceux-ci en contact avec le côté supérieur du châssis de rouleau, d'une manière telle qu'on obtient un accouplement entre les saillies et les évidements du rouleau et des bras, et finalement un serrage des bras sur le châssis du rouleau.
